(19) Europäisches Patentamt
European Patent Office
Office européen des brevets

(11) **EP 0 649 593 B1**

(12) **FASCICULE DE BREVET EUROPEEN**

(45) Date de publication et mention
de la délivrance du brevet:
**05.11.1997 Bulletin 1997/45**

(51) Int. Cl.$^6$: **A01G 17/00**

(21) Numéro de dépôt: **94402362.1**

(22) Date de dépôt: **20.10.1994**

(54) **Procédé d'éclaircissage chimique de la vigne**

Verfahren zum chemischen Ausdünnen der Weinrebe

Grape-vine chemical thinning process

(84) Etats contractants désignés:
**DE ES IT**

(30) Priorité: **20.10.1993 FR 9312502**

(43) Date de publication de la demande:
**26.04.1995 Bulletin 1995/17**

(73) Titulaire: **CFPI AGRO**
**92233 Gennevilliers (FR)**

(72) Inventeurs:
• **Schapira, Joseph**
**F-75015 Paris (FR)**
• **Sergent, Gérard**
**F-92300 Levallois Perret (FR)**
• **Ambrosi, Dominique**
**F-92400 Courbevoie (FR)**

(74) Mandataire: **Koch, Gustave et al**
**Cabinet Plasseraud**
**84, rue d'Amsterdam**
**75440 Paris Cédex 09 (FR)**

(56) Documents cités:
**DE-A- 3 144 651**

• **AMERICAN JOURNAL OF ENOLOGY AND VITICULTURE, vol.34, no.2, 1983 pages 53 - 56 E. SZYJEWICZ ET AL. 'Influence of Timing of Ethephon Application on Yield and Fruit Composition of Chenin Blanc Grapevines'**
• **BULLETIN DE L'ORGANISATION EUROPEENNE ET MEDITERRANEENNE POUR LA PROTECTION DES PLANTES, vol.14, no.2, 1984 pages 295 - 298 'Echelles OEPP des Stades de Développement des Plantes Cultivées : Vigne'**
• **AMERICAN JOURNAL OF ENOLOGY AND VITICULTURE, vol.44, no.3, 1993 page 354 D.J. HIRSCHFELT ET AL. 'Influence of Cluster Thinning at Various Stages of Fruit Development on Flame Seedless Table Grapes' & 44TH ANNUAL MEETING OF THE AMERICAN SOCIETY FOR ENOLOGY AND VITICULTURE, Sacramento, California, US, June 1993**
• **HORTSCIENCE, vol.26, no.6, 1991 page 754 J. FITZGERALD ET AL. 'Environmental Factors and Ethephon Affects Reliance Table Grape Quality'**

EP 0 649 593 B1

**Description**

L'invention a pour objet un procédé d'éclaircissage chimique de la vigne.

On désigne par "éclaircissage" la technique consistant à supprimer sur chaque cep ou souche un certain nombre de grappes.

Cette technique, qui est bien connue du viticulteur, peut être rendue nécessaire pour éviter des rendements trop élevés.

Les rendements trop élevés de la vigne peuvent, en effet, se traduire défavorablement sur la qualité de la vendange; le législateur a donc été conduit à imposer des rendements maximums qui varient en fonction du type de vin produit; ces rendements maximums sont par exemple de 90 hectolitres/ha pour les vins de table et de l'ordre de 40 à 60 hectolitres/ha pour les vins d'appellation d'origine contrôlée.

Le poids de grappes vendangées, nécessaire pour la préparation d'un hectolitre de vin étant en moyenne de 125 kg, il s'ensuit que les susdits rendements en hectolitres/ha correspondent, respectivement, à des rendements en q/ha de grappes vendangées d'environ 115 q/ha, d'une part, et d'environ 50 à 75 q/ha, d'autre part.

Les rendements normaux dépassant souvent largement ces valeurs, il peut devenir nécessaire de les réduire en ayant recours à l'éclaircissage.

Il est connu d'effectuer l'éclaircissage manuellement; compte tenu toutefois de l'importance du temps de travail requis qui est généralement de 50 à 70 heures par hectare et du coût de la main d'oeuvre, cette technique n'est envisageable, d'un point de vue économique, que pour des productions hautement rémunératrices.

Il a donc été proposé de recourir, au moment de la nouaison, à l'application sur les ceps ou souches d'une solution d'un produit chimique, en l'occurrence d'éthéphon ou acide 2-chloroéthyl-phosphonique, capable de provoquer la chute d'une partie des grappes.

La raison pour laquelle cette technique ne s'est pas imposée réside dans le fait que ses résultats sont aléatoires et peuvent conduire à des volumes de récolte extrêmement variables, donc souvent incompatibles avec une exploitation économiquement acceptable des vignobles; ainsi, si pour une production donnée le rendement effectif après traitement d'éclaircissage est supérieur à la limite légale, cette production doit être transformée en alcool industriel; si, par contre, ledit rendement effectif est notablement inférieur à ladite limite légale, il en résulte une perte de revenu importante; il se trouve que ces deux situations ne sont pas économiquement acceptables.

La Société Demanderesse s'est donc donné pour but de remédier à cet état de choses et de mettre au point un procédé d'éclaircissage chimique du genre en question qui permette d'aboutir de manière non aléatoire au rendement effectif souhaité.

S'appuyant sur les travaux d'Eichhorn et Lorenz [voir Bulletin de l'Organisation Européenne et Méditerranéenne pour la Protection des Plantes, OEPP/EPPO Bull. 14(2): 295-298 (1984)] selon lesquels le développement de la vigne comprend un certain nombre de stades phénologiques numérotés de 01 à 47, elle a montré que la mise en oeuvre d'un traitement d'éclaircissage chimique du genre en question conduisait à des taux d'éclaircissage différents selon qu'il a lieu au moment de l'un ou de l'autre des stades portant les numéros 25 à 33 qui sont décrits dans le tableau I ci-après, (ledit taux étant de 100% pour les stades 25 et antérieurs et de 0% pour les stades 33 et ultérieurs), c'est-à-dire à la suppression d'un pourcentage variable de grappes, chacun de ces pourcentages correspondant à une classe d'éclaircissage, ces classes étant également indiquées avec mention du pourcentage correspondant dans ledit tableau I.

TABLEAU I

| Stade | Description du stade | Classe d'éclaircissage |
|---|---|---|
| 25 | Fin de floraison, 80% des capuchons floraux sont tombés | 100% |
| 26 | Tout début nouaison, 90% des capuchons floraux sont tombés | 95% |
| 27 | Nouaison: les jeunes fruits commencent à grossir, toutes les pièces florales sont tombées | 90% |
| 28 | Baies de la taille de petits grains de plomb | 75% |
| 29 | Baies de la taille de grains de plomb | 50% |
| 30 | Baies de la taille d'un petit pois | 35% |
| 31 | Baies de la taille d'un gros pois | 25% |
| 32 | La grappe se ferme | 5% |
| 33 | Fermeture de la grappe | 0% |

Et elle a eu le mérite d'avoir trouvé, à l'issue de recherches approfondies, que le susdit but était atteint dès lors que, pour l'obtention d'un taux d'éclaircissage donné prédéterminé, l'on applique à la vigne, notamment par pulvérisation, une solution d'éthéphon, avantageusement à une dose d'environ 360 g/ha, à un moment précis, c'est-à-dire dans le courant de l'une des journées de la période d'environ 15 jours qui sépare le stade de la fin de la floraison (stade 25) de celui de la fermeture des grappes (stade 33), ledit moment qui est fonction du taux d'éclaircissage donné recherché et du rendement normal qui serait obtenu sans traitement d'éclaircissage, étant déterminé, pour une parcelle donnée du vignoble à traiter, en procédant à des temps réguliers, généralement tous les deux à quatre jours, à un ensemble d'observations consistant en un examen des souches de plusieurs placettes réparties régulièrement dans la parcelle et comportant chacune le même nombre donné de souches, ledit examen consistant à relever dans chaque placette le nombre de grappes correspondant respectivement à chacun des stades selon Eichhorn et Lorenz, à multiplier le nombre de grappes correspondant à chacun de ces stades par le taux de la classe d'éclaircissage correspondante et à diviser la somme des valeurs ainsi obtenues par le nombre total de grappes, ce qui fournit le taux d'éclaircissage probable au jour de l'observation donné pour la placette, la moyenne des valeurs enregistrées pour l'ensemble des placettes fournissant la valeur du taux d'éclaircissage probable de la parcelle, ledit ensemble d'observations étant répété jusqu'au jour auquel le taux d'éclaircissage probable ainsi déterminé est le plus proche du taux d'éclaircissage recherché, la parcelle entière étant alors traitée, de préférence le jour même, par la susdite solution d'éthéphon.

Dans le cadre du susdit procédé, le calcul de la valeur moyenne du taux d'éclaircissage obtenu à l'issue de chacun des susdits ensembles d'expériences, taux d'éclaircissage moyen qui correspond au taux d'éclaircissage probable qui serait obtenu par l'application de l'éthéphon au jour donné à l'ensemble de la parcelle, est effectué comme exposé ci-après.

On calcule tout d'abord, pour la parcelle prise en considération, le rendement probable sans traitement d'éclaircissage.

Pour ce faire, on sélectionne dans la parcelle en question un nombre donné --par exemple, égal à 5-- de placettes régulièrement réparties dans la parcelle et comportant chacune un nombre donné --par exemple, également de 5-- souches.

On dénombre l'ensemble des grappes présentes sur les cinq souches de chacune des cinq placettes.

Le nombre moyen de grappes par souche est égal à la moyenne du nombre de grappes par placette divisé par 5.

Connaissant, de par les récoltes précédentes, le poids moyen d'une grappe à la récolte, on obtient la valeur du rendement probable en multipliant ce poids moyen par le nombre moyen de grappes par souche et la valeur ainsi obtenue par le nombre de souches à l'hectare.

Ce rendement probable une fois calculé, on détermine le taux d'éclaircissage nécessaire pour aboutir au rendement effectif souhaité.

Ce taux d'éclaircissage nécessaire ou souhaité T est calculé par la formule:

$$T = (1 - \frac{\text{rendement souhaité}}{\text{rendement probable}})\ 100$$

A titre d'exemple, sachant que le nombre de grappes pour les cinq placettes est:

Placette 1 : 56 grappes
Placette 2 : 71 grappes
Placette 3 : 62 grappes
Placette 4 : 59 grappes
Placette 5 : 63 grappes,

le nombre moyen de grappes par placette est de 62,2.
Le nombre moyen de grappes par souche est donc de

$$62,2/5 = 12,44.$$

Sachant que le poids moyen d'une grappe est de 145 g et que le nombre de souches par hectare est de 8500, le poids moyen de grappes par souche étant de 1,80 kg, on obtient pour le rendement probable la valeur de

$$153\ q/ha.$$

Sachant, par ailleurs, que pour la vigne traitée le poids de récolte souhaité est de

$$69\ q/ha,$$

3

le taux d'éclaircissage souhaité T calculé par la susdite formule est de

$$T = ( 1 - \frac{69}{153}) \, 100 = 55\%.$$

Enfin, on détermine, par application du procédé conforme à l'invention, le jour précis auquel la mise en oeuvre de l'éthéphon conduira à ce taux d'éclaircissage souhaité, c'est-à-dire au rendement recherché.

Il est supposé que, pour ce faire, on a recours par exemple à cinq placettes régulièrement réparties et comportant chacune le même nombre de souches, par exemple cinq.

On observe ces placettes à intervalles réguliers, par exemple tous les deux, trois ou quatre jours, à partir du stade 25 et jusqu'au stade permettant l'obtention du taux d'éclaircissage souhaité selon l'invention.

Dans chaque placette, on examine chaque souche et on relève le nombre de grappes de chaque souche qui correspond à chacun des stades 27 à 33, sachant que chacun de ces stades correspond à l'une des susdites classes d'éclaircissage.

On détermine ainsi que, par exemple, pour une placette donnée, il y a $n_1$ grappes au stade 27, $n_2$ grappes au stade 28, $n_3$ grappes au stade 29, et ainsi de suite, par exemple zéro grappe pour chacun des stades 30 à 33.

Sachant que la classe d'éclaircissage correspondant au stade 27 est 90%, que celle correspondant au stade 28 est 75% et que celle correspondant au stade 29 est 50%, on obtient pour la placette en question la valeur du taux probable d'éclaircissage par le calcul suivant:

$$\frac{n_1 \times 90 + n_2 \times 75 + n_3 \times 50}{n_1 + n_2 + n_3} \, .$$

Après avoir procédé de la même manière pour les quatre autres placettes, on détermine le taux probable d'éclaircissage pour la parcelle en calculant la moyenne des taux d'éclaircissage probables déterminés pour chacune des placettes.

C'est lorsque ce taux d'éclaircissage probable est le plus proche du taux d'éclaircissage souhaité que l'on applique le traitement à l'éthéphon.

Les déterminations qui viennent d'être explicitées sont particulièrement facilitées par le recours à des tableaux préparés à l'avance et comportant pour chaque placette de la parcelle observée des cases relatives à chacune des classes d'éclaircissage, cases dans lesquelles on inscrit, d'une part, le nombre n de grappes qui sont au stade phénologique de la vigne correspondant à la classe d'éclaircissage en question et, d'autre part, éventuellement le nombre obtenu par la multiplication du nombre de grappes par le pourcentage de la classe d'éclaircissage correspondante.

On prévoit également pour chaque placette une case réservée à l'indication du taux d'éclaircissage moyen probable déterminé pour cette placette et, de préférence, une case réservée à l'indication de la moyenne des taux d'éclaircissage des cinq placettes, moyenne qui correspond au taux d'éclaircissage probable, au jour de l'observation, pour la parcelle entière.

Pour illustrer ce qui précède, on reproduit ci-après trois tableaux la, lb et lc du genre en question réunissant lesdites observations relevées sur les cinq placettes d'une parcelle donnée respectivement à trois dates successives, à savoir au 24-06, au 27-06 et au 29-06.

## TABLEAU Ia

| Obs du 24/6 | | Classe d'éclaircissage | | | | | Effectif total | Taux d'éclaircissage moyen |
|---|---|---|---|---|---|---|---|---|
| | N° placette | 100% | 90% | 75% | 50% | 25% | | |
| | placette 1 | 2 | 11 | 42 | 10 | 0 | 65 | 74,5% |
| | placette 2 | 0 | 10 | 29 | 8 | 0 | 47 | 73,9% |
| | placette 3 | 0 | 16 | 35 | 8 | 0 | 59 | 75,7% |
| | placette 4 | 0 | 7 | 31 | 12 | 2 | 52 | 69,3% |
| | placette 5 | 0 | 3 | 40 | 9 | 1 | 0% | 70,7% |
| Taux d'éclaircissage probable pour la parcelle | | | | | | | | 72,8% |

## TABLEAU Ib

| Obs | N° placette | Classe d'éclaircissage | | | | | Effectif total | Taux d'éclaircis-sage moyen |
|-----|-------------|------|-----|-----|-----|-----|------|------|
| | | 100% | 90% | 75% | 50% | 25% | | |
| | placette 1 | 0 | 2 | 15 | 25 | 6 | 48 | 56,4% |
| | placette 2 | 0 | 4 | 26 | 37 | 5 | 72 | 59,6% |
| du | placette 3 | 4 | 10 | 24 | 23 | 7 | 68 | 65,1% |
| | placette 4 | 1 | 5 | 22 | 31 | 5 | 64 | 60,5% |
| 27/6 | placette 5 | 0 | 5 | 19 | 30 | 7 | 61 | 58,2% |
| | Taux d'éclaircissage probable pour la parcelle | | | | | | | 60,0% |

## TABLEAU Ic

| Obs | N° placette | Classe d'éclaircissage | | | | | Ef-fectif total | Taux d'éclaircis-sage moyen |
|-----|-------------|------|-----|-----|-----|-----|------|------|
| | | 100% | 90% | 75% | 50% | 25% | | |
| | placette 1 | 0 | 0 | 6 | 21 | 14 | 41 | 45,1% |
| | placette 2 | 0 | 0 | 4 | 34 | 21 | 59 | 42,8% |
| du | placette 3 | 0 | 0 | 8 | 34 | 16 | 58 | 46,6% |
| | placette 4 | 0 | 0 | 2 | 23 | 18 | 43 | 40,7% |
| 29/6 | placette 5 | 0 | 0 | 2 | 45 | 25 | 72 | 42,0 |
| | Taux d'éclaircissage probable pour la parcelle | | | | | | | 43,4% |

A supposer que le taux d'éclaircissage souhaité par le viticulteur soit de 45%, le traitement devra être mis en oeuvre à la date du 29-06.

Partant des principes exposés ci-dessus, la Société Demanderesse a soumis au procédé conforme à l'invention, dans différentes régions, quatre parcelles correspondant respectivement à quatre cépages différents, à savoir:

Cabernet Sauvignon
Cabernet franc
Muscadelle
Ugni blanc.

Dans tous les cas, elle a déterminé:

- les rendements estimé et constaté en l'absence de traitement,
- le rendement désiré, c'est-à-dire imposé,
- la valeur subséquente du taux d'éclaircissage désiré,
- le taux d'éclaircissage probable à l'application, et

- le rendement réellement obtenu.

Les résultats ainsi obtenus sont réunis dans le tableau II ci-après.

TABLEAU II

| Cépage | Rendement q/ha en absence de traitement | | Rendement désiré q/ha | Taux d'éclaircissage désiré | Taux d'éclaircissage probable à l'application | Rendement réellement obtenu q/ha |
|---|---|---|---|---|---|---|
| | estimé | constaté | | | | |
| Cabernet Sauvignon | 203 | 197 | 94 | 54 | 46 | 87 |
| Cabernet franc | 174 | 167 | 94 | 46 | 43 | 90 |
| Muscadelle | 145 | 155 | 108 | 26 | 32 | 110 |
| Ugni blanc | 258 | 224 | 125 | 52 | 50 | 118 |

L'examen de ces résultats montre que la différence entre le rendement désiré et le rendement obtenu est inférieure à 10%, ce qui, compte tenu de la variabilité du matériel biologique, démontre clairement la précision du procédé conforme à l'invention.

**Revendications**

**1.** Procédé d'éclaircissage chimique de la vigne caractérisé par le fait que, pour l'obtention d'un taux d'éclaircissage donné prédéterminé, l'on applique à la vigne, notamment par pulvérisation, une solution d'éthéphon, avantageusement à une dose d'environ 360 g/ha, à un moment précis dans le courant de l'une des journées de la période d'environ 15 jours qui sépare le stade de la fin de la floraison, c'est-à-dire stade 25 selon Eichhorn et Lorenz, de celui de la fermeture des grappes, c'est-à-dire stade 33 selon Eichhorn et Lorenz, ledit moment qui est fonction du taux d'éclaircissage donné recherché et du rendement normal qui serait obtenu sans traitement d'éclaircissage, étant déterminé, pour une parcelle donnée du vignoble à traiter, en procédant à des temps réguliers, généralement tous les deux à quatre jours, à un ensemble d'observations consistant en un examen des souches de plusieurs placettes réparties régulièrement dans la parcelle et comportant chacune le même nombre donné de souches, ledit examen consistant à relever dans chaque placette le nombre de grappes correspondant respectivement à chacun des stades selon Eichhorn et Lorenz, à multiplier le nombre de grappes correspondant à chacun de ces stades par le taux de la classe d'éclaircissage correspondante et à diviser la somme des valeurs ainsi obtenues par le nombre total de grappes, ce qui fournit le taux d'éclaircissage probable au jour de l'observation donné pour la placette, la moyenne des valeurs enregistrées pour l'ensemble des placettes fournissant la valeur du taux d'éclaircissage probable de la parcelle, ledit ensemble d'observations étant répété jusqu'au jour auquel le taux d'éclaircissage probable ainsi déterminé est le plus proche du taux d'éclaircissage recherché, la parcelle entière étant alors traitée, de préférence le jour même, par la susdite solution d'éthéphon, les stades selon Eichhorn et Lorenz étant comme suit:

| Stade | Description du stade | Classe d'éclaircissage |
|---|---|---|
| 25 | Fin de floraison, 80% des capuchons floraux sont tombés | 100% |
| 26 | Tout début nouaison, 90% des capuchons floraux sont tombés | 95% |
| 27 | Nouaison: les jeunes fruits commencent à grossir, toutes les pièces florales sont tombées | 90% |
| 28 | Baies de la taille de petits grains de plomb | 75% |
| 29 | Baies de la taille de grains de plomb | 50% |
| 30 | Baies de la taille d'un petit pois | 35% |
| 31 | Baies de la taille d'un gros pois | 25% |
| 32 | La grappe se ferme | 5% |
| 33 | Fermeture de la grappe | 0% |

2. Procédé selon la revendication 1, caractérisé par l'utilisation de tableaux préparés à l'avance et comportant pour chaque placette de la parcelle observée des cases relatives à chacune des classes d'éclaircissage, cases dans lesquelles on inscrit, d'une part, le nombre n de grappes qui sont au stade phénologique de la vigne correspondant à la classe d'éclaircissage en question et, d'autre part, éventuellement le nombre obtenu par la multiplication du nombre de grappes par le pourcentage de la classe d'éclaircissage correspondante, lesdits tableaux comportant également pour chaque placette une case réservée à l'indication du taux d'éclaircissage moyen probable déterminé pour cette placette et, de préférence, une case réservée à l'indication de la moyenne des taux d'éclaircissage de l'ensemble des placettes prévues dans la parcelle, moyenne qui correspond au taux d'éclaircissage probable, pour la parcelle entière, au jour de l'observation.

**Claims**

1. Process for chemical thinning of grapevine characterized by the fact that, to obtain a given predetermined thinning rate, a solution of ethephon, advantageously at a rate of about 360 g/ha, is applied to grapevine, especially by spraying, at a precise moment during one of the days of the period of about 15 days which separates the stage of the late flowering , i.e. stage 25 according to Eichhorn & Lorenz, from that of the beginning of berry touch, i.e. stage 33 according to Eichhorn & Lorenz, the said moment which is a function of the given requested thinning rate and of the normal yield which would have been obtained without thinning treatment, being determined, for a given plot of grapevine to be treated, by proceeding at regular intervals, generally every two to four days, to a pool of observations consisting of an examination of the stocks of several plots regularly spread over the vineyard and comprising each the same given number of stocks, the said examination consisting of counting in each plot the number of grapes corresponding respectively to each of the stages according to Eichhorn & Lorenz, of multiplying the number of grapes corresponding to each of these stages by the rate of the corresponding thinning class and of dividing the sum of the thus obtained values by the total number of grapes, which provides the probable thinning rate at the given day of observation for the plot, the average of the values recorded for the whole of the plots giving the value of the probable thinning rate of the vineyard, the said pool of observations being repeated until the day at which the probable thinning rate thus determined is very close to the requested thinning rate, the whole plot being then treated, preferably the same day, by the abovesaid solution of ethephon, the stages according to Eichhorn & Lorenz being as follows:

| Stage | Description of the stage | Thinning Class |
|---|---|---|
| 25 | Late flowering: 80% of flowerhoods fallen | 100% |
| 26 | Very early fruit set, 90% of flowerhoods fallen | 95% |
| 27 | Fruit set: young fruits begin to swell, remains of flowers lost | 90% |
| 28 | Berries little piece of lead-sized | 75% |
| 29 | Berries piece of lead-sized | 50% |
| 30 | Berries pea-sized | 35% |
| 31 | Berries big pea-sized | 25% |
| 32 | Bunch closing | 5% |
| 33 | Beginning of berry touch | 0% |

2. Process according to claim 1, characterized by the use of tables prepared in advance and comprising for each plot of the vineyard which is observed, boxes corresponding to each of the thinning classes, boxes in which are indicated, on the one hand, the number n of grapes which are at the phenologic stage of the grapevine corresponding to the thinning class in question and, on the other hand, possibly the number obtained by the multiplication of the number of grapes by the percentage of the corresponding thinning class, the said tables comprising also for each plot a box reserved for the indication of the probable average thinning rate determined for this plot and, preferably, a box reserved for indicating the average of thinning rates of the group of plots comprised in the vineyard, average which corresponds to the probable thinning rate at the day of observation for the entire vineyard.

**Patentansprüche**

1. Verfahren zur chemischen Ausdünnung von Reben, dadurch gekennzeichnet, daß man, um einen gegebenen, vorbestimmten Ausdünnungsgrad zu erhalten, auf die Reben insbesondere durch Besprühen, vorzugsweise in einer Dosierung von etwa 360 g/ha, eine Ethephon-Lösung aufbringt, zu einem exakten Zeitpunkt im Laufe eines der Tage des Zeitraums von etwa 15 Tagen, der das Blüteendstadium, d.h. Stadium 25 gemäß Eichhorn und Lorenz, von dem des Schließens der Trauben, d.h. Stadium 33 gemäß Eichhorn und Lorenz, trennt, wobei der Zeitpunkt, welcher abhängig ist von dem gegebenen, erstrebten Ausdünnungsgrad und dem normalen Ertrag, der ohne Ausdünnungsbehandlung erhalten würde, bestimmt wird für eine gegebene Parzelle des zu behandelnden Weinbergs durch Vornehmen mehrerer Beobachtungen in regelmäßigen Zeitabständen, im allgemeinen allen zwei bis vier Tagen, bestehend aus einer Untersuchung von Rebstöcken in mehreren, gleichmäßig in der Parzelle verteilten Stellen, die jeweils die gleiche gegebene Anzahl von Rebstöcken umfassen, wobei die Untersuchung aus einer Ermittlung der Anzahl der dem jeweiligen Stadium gemäß Eichhorn und Lorenz entsprechenden Trauben besteht, Multiplizieren der Anzahl der dem jeweiligen dieser Stadien entsprechenden Anzahl von Trauben mit dem Grad der entsprechenden Ausdünnungsklasse und Dividieren der Summe der derart erhaltenen Werte durch die Gesamtzahl der Trauben, wodurch der am gegebenen Beobachtungstag für die Stelle wahrscheinliche Ausdünnungsgrad ermittelt wird, wobei der Mittelwert der für die Gesamtheit der Stellen aufgenommenen Werte den Wert des wahrscheinlichen Ausdünnungsgrades der Parzelle liefert, wobei die mehreren Beobachtungen bis zu dem Tag wiederholt werden, an dem der wahrscheinliche Ausdünnungsgrad dem angestrebten Ausdünnungsgrad am nächsten kommt, wobei die gesamte Parzelle daraufhin bevorzugt am selben Tag mit der Ethephonlösung behandelt wird, wobei die Stadien gemäß Eichhorn und Lorenz wie folgt sind:

| Stadium | Beschreibung des Stadiums | Ausdünnungsklasse |
|---|---|---|
| 25 | Ende der Blüte, 80 % der Blütenkappen sind abgefallen | 100 % |
| 26 | Beginn des Fruchtansatzes, 90 % der Blütenkappen sind abgefallen | 95 % |
| 27 | Fruchtansatz: die Fruchtknoten beginnen sich zu vergrößern, alle Blütenteile sind abgefallen | 90 % |
| 28 | Beeren in Größe kleiner Bleikörner | 75 % |
| 29 | Beeren in Größe von Bleikörnern | 50 % |
| 30 | Beeren in Größe einer kleinen Erbse | 35 % |
| 31 | Beeren in Größe einer großen Erbse | 25 % |
| 32 | Die Traube schließt sich | 5 % |
| 33 | Schließen der Traube | 0 % |

2.  Verfahren nach Anspruch 1, gekennzeichnet durch die Verwendung von im voraus vorbereiteten Tabellen, die für jede Stelle der beobachteten Parzelle Zellen für jede Ausdünnungsklasse umfassen, wobei man in die Zellen einerseits die Anzahl n der Trauben, die sich in dem der fraglichen Ausdünnungsklasse entsprechenden phänologischen Rebenstadium befinden, einträgt, andererseits gegebenenfalls die durch Multiplikation der Anzahl von Trauben mit dem Prozentsatz der entsprechenden Ausdünnungsklasse erhaltene Zahl, wobei die Tabellen auch für jede Stelle eine Zelle, welche für die Angabe des für jede Stelle bestimmten mittleren wahrscheinlichen Ausdünnungsgrades reserviert ist, umfassen und bevorzugt eine Zelle, welche für die Angabe des Mittelwerts der Ausdünnungsgrade der Gesamtheit der in der Parzelle vorgesehenen Stellen reserviert ist, wobei der Mittelwert dem wahrscheinlichen Ausdünnungsgrad für die gesamte Parzelle am Beobachtungstag entspricht.